# EUROPÄISCHE PATENTSCHRIFT

(11) **EP 1 063 838 B1**
(45) Veröffentlichungstag und Bekanntmachung des Hinweises auf die Patenterteilung: **23.08.2006**
(21) Anmeldenummer: 00111513.8
(22) Anmeldetag: 29.05.2000
(51) Int. Cl.: H04M 3/22

(54) **Verfahren für eine Nachrichtenübermittlung zwischen zwei Kommunikationseinrichtungen**
Method for messaging between two communication devices
Procédé de messagerie entre deux systèmes de communications

(30) Priorität: 23.06.1999 DE 19928782
(43) Veröffentlichungstag der Anmeldung: 27.12.2000
(73) Patentinhaber: SIEMENS AKTIENGESELLSCHAFT, 80333 München (DE)
(72) Erfinder: Karlitschek, Helmut, 82291 Mammendorf (DE)

(56) Entgegenhaltungen:
- EP-A- 0 568 792

## Beschreibung

Aus der Produktschrift "Sonderausgabe telcom report und Siemens Magazin Com: ISDN im Büro - HICOM", Siemens AG, Berlin und München, 1985, insbesondere der Seiten 32 bis 37 ist ein Kommunikationssystem mit einer privaten Kommunikationsanlage HICOM bekannt, bei der ausgehend von einer kommunikationssystem-externen Administrationseinrichtung eine Fernverwaltung bzw. eine Fernwartung der Kommunikationsanlage HICOM möglich ist. Durch die Fernverwaltung können beispielsweise neue Anwendungen für die Kommunikationsanlage ohne einen Einsatz von Personal vor Ort in die Kommunikationsanlage implementiert werden, so daß eine kürzere Reaktionszeit auf Änderungswünsche von Kunden erreicht wird. Die Fernwartung dient einem frühzeitigen Erkennen und Melden von eventuell auftretenden Unregelmäßigkeiten im Kommunikationsanlagenbetrieb, so daß eine erhöhte Verfügbarkeit der Kommunikationsanlage erreicht wird.

Ein Zugang - in der Literatur häufig als Administrations- oder Wartungszugang bezeichnet - von der Administrationseinrichtung zur Kommunikationsanlage erfolgt dabei in der Regel über ein öffentliches Kommunikationsnetz. Alternativ kann die Administrationseinrichtung - wie auf Seite 55, Bild 5 ersichtlich - aber auch vor Ort direkt über eine V.24-Schnittstelle an die Kommunikationsanlage angeschlossen werden.

Für eine - im Rahmen der Fernwartung erfolgende - Aufzeichnung der in der Kommunikationsanlage ablaufenden Aktionen bzw. Zustände der Kommunikationsanlage werden mittels einer, in der Kommunikationsanlage ablaufenden Überwachungsapplikation an einstellbaren Punkten - beispielsweise an einer Teilnehmeranschlußschnittstelle oder in der zentralen Vermittlungstechnik - der Kommunikationsanlage auftretende Ereignisse oder Meldungen - beispielsweise ein Tastendruck eines Kommunikationsendgerätes - protokolliert und entsprechende Meldungen in einer Speichereinrichtung der Kommunikationsanlage zwischengespeichert. Eine derartige Überwachungseinrichtung wird in der Literatur z.B. EP 0 568 792 A2 häufig als 'Tracer' bezeichnet. Zur Einhaltung von eventuell bestehenden Echtzeitanforderungen werden die einzelnen Meldungen anschließend jeweils nach Empfang einer von der Administrationseinrichtung initiierten Anforderungsmeldung nacheinander von der Kommunikationsanlage an die Administrationseinrichtung übermittelt und von dieser z.B. an einem Bildschirm ausgegeben.

Soll beispielsweise eine unter starker Last stehende über einen Primärmultiplexanschluß - in der Literatur häufig auch als S_{2M}-Schnittstelle bezeichnet - an die Kommunikationsanlage angeschlossene Leitung überwacht werden, erhöht dies die Anzahl der zu übermittelnden Meldungen in bzw. aus der Kommunikationsanlage heraus erheblich. Dies führt zu einem Anstieg der Reaktionszeit der Kommunikationsanlage, z.B. auf einen, an einem internen Kommunikationsendgerät erfolgten Tastendruck und somit zu einer Beeinträchtigung des Benutzungskomforts.

Erfolgt zusätzlich ein Anschluß der Administrationseinrichtung über eine Anlagenschnittstelle mit geringer Datenübertragungsrate - beispielsweise über eine V.24-Schnittstelle - kann dies zu einem Überlaufen der, einer Zwischenspeicherung der Meldungen dienenden Speichereinrichtung und somit trotz einer Belastung der Anlagenressourcen durch die Überwachungseinrichtung zu einem Verlust von Meldungen führen. In Sonderfällen kann es dabei auch zu einer Unterbrechung der Verbindung zwischen der Kommunikationsanlage und der Administrationseinrichtung kommen.

Der vorliegenden Erfindung liegt die Aufgabe zugrunde, ein Verfahren anzugeben, durch welches eine Übermittlung von Meldungen von einer anlageninternen Überwachungseinrichtung an eine anlagenexterne Administrationseinrichtung mit geringer Belastung der Anlagen-Ressourcen ermöglicht wird.

Die Lösung dieser Aufgabe erfolgt erfindungsgemäß mit den Merkmalen des Patentanspruchs 1.

Ein wesentlicher Vorteil des erfindungsgemäßen Verfahrens besteht nun darin, daß durch ein Zwischenspeichern und Zusammenfassen der zu übermittelnden Nachrichten zu einem Nachrichtenblock in einer ersten Speichereinrichtung der Kommunikationsanlage und ein nachfolgendes Übermitteln des Nachrichtenblocks an eine zweite Speichereinrichtung der Kommunikationsanlage, von der aus der gesamte Nachrichtenblock nach Empfang einer Anforderungsmeldung an die Administrationseinrichtung übermittelt wird, kann die Anzahl der in bzw. aus der Kommunikationsanlage heraus zu übermittelnden Nachrichten auf einfache Weise reduziert werden. Da eine Nachricht in der Regel eine Länge zwischen 20 und 200 Byte aufweist, die für eine Datenübermittlung zwischen der Kommunikationsanlage und der Administrationseinrichtung zur Verfügung stehenden Datenpakete jedoch in der Regel eine Länge von 250 Byte aufweisen, wird durch das Zusammenfassen mehrerer Nachrichten in einen Nachrichtenblock mit einer maximalen Länge von 250 Byte die zwischen der Kommunikationsanlage und der Administrationseinrichtung zur Verfügung stehende Übertragungsbandbreite besser ausgenützt.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Definition eines oberen und eines unteren Speicherfüllwertes für die zweite Speichereinrichtung, wobei bei Erreichen des oberen Speicherfüllwertes die Überwachungseinrichtung gestoppt und erst bei einem Unterschreiten des unteren Speicherfüllwertes wieder gestartet wird, eine unnütze Beanspruchung der Anlagenressourcen durch die Überwachungseinrichtung auf einfache Weise unterbindbar ist.

Ein Ausführungsbeispiel der Erfindung wird im folgenden anhand der Zeichnung näher erläutert.

Dabei zeigen:
- Fig. 1:: ein Strukturbild zur schematischen Darstellung der am erfindungsgemäßen Verfahren beteiligten wesentlichen Funktionseinheiten;
- Fig. 2a, 2b:: jeweils ein Ablaufdiagramm zur Veranschaulichung der beim erfindungsgemäßen Verfahren ablaufenden wesentlichen Verfahrensschritte.

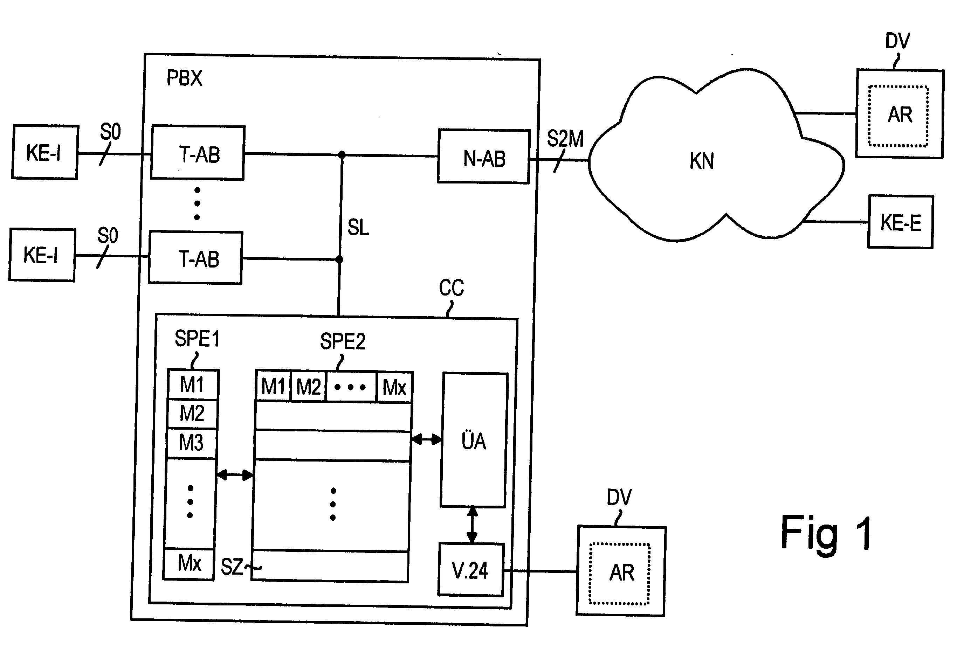

Fig. 1 zeigt in einer schematischen Darstellung eine Kommunikationsanlage PBX mit darin angeordneten Anschlußbaugruppen. Beispielhaft sind zwei Teilnehmeranschlußbaugruppen T-AB zum Anschluß von internen Kommunikationsendgeräten KE-I und eine Netzanschlußbaugruppe N-AB zum Anschluß eines Kommunikationsnetzes KN an die Kommunikationsanlage PBX dargestellt. Der Anschluß von digitalen internen Kommunikationsendgeräten KE-I an die Teilnehmeranschlußbaugruppen T-AB erfolgt hierbei mittels S₀-Schnittstellen oder mittels daraus abgeleiteten Schnittstellen, wie beispielsweise Uₚ₀-Schnittstellen. Allgemein umfassen eine U_{P0}- bzw. eine S₀-Schnittstelle zum einen 2 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 16 kBit/s ausgestaltet ist. Des weiteren können analoge interne Kommunikationsendgeräte KE-I über a/b-Schnittstellen an die Kommunikationsanlage PBX angeschlossen werden.

Der Anschluß des Kommunikationsnetzes KN - im vorliegenden Ausführungsbeispiel eines ISDN-Kommunikationsnetzes - an die Kommunikationsanlage PBX erfolgt mittels einer S_{2M}-Schnittstelle - in der Literatur häufig auch als Primärmultiplexanschluß bezeichnet. Allgemein umfaßt eine S_{2M}-Schnittstelle zum einen 30 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 64 kBit/s ausgestaltet ist.

Die Anschlußbaugruppen sind über eine Steuerleitung SL mit einer zentralen Steuerung CC der Kommunikationsanlage PBX verbunden. Über die Steuerleitung SL werden über einen Signalisierungskanal an die Kommunikationsanlage PBX übermittelte Informationen von der jeweiligen Anschlußbaugruppe an die zentrale Steuerung CC bzw. über einen Signalisierungskanal an ein internes Kommunikationsendgerät KE-I oder ein externes Kommunikationsendgerät KE-E zu übermittelnde Informationen von der zentralen Steuerung CC an die jeweilige Anschlußbaugruppe T-AB, N-AB übermittelt.

Zur Administrierung der Kommunikationsanlage PBX ist an das Kommunikationsnetz KN eine Datenverarbeitungseinrichtung DV angeschlossen. In der Datenverarbeitungseinrichtung DV ist eine Administrationsroutine AR integriert - durch die gepunktete Linie angedeutet - durch die eine Steuerung einer in der zentralen Steuerung CC der Kommunikationsanlage PBX integrierten Überwachungsapplikation ÜA erfolgt. Durch die Verbindung der Datenverarbeitungseinrichtung DV mit der Kommunikationsanlage PBX über das Kommunikationsnetz KN wird dieser Zugang in der Literatur häufig als 'Remote-Zugang' bezeichnet. Alternativ kann ein Anschluß der Datenverarbeitungseinrichtung DV über eine Schnittstelle V.24 der zentralen Steuerung CC direkt an die Kommunikationsanlage PBX erfolgen. Durch den direkten Anschluß der Datenverarbeitungseinrichtung DV an die Kommunikationsanlage PBX wird dieser Zugang in der Literatur häufig als 'Local-Zugang' bezeichnet. Folglich wird die Administrationsroutine AR in der Literatur je nach Anschlußart als 'Remote-Tracer' bzw. 'Local-Tracer' bezeichnet.

Durch die Überwachungsapplikation ÜA besteht die Möglichkeit an bestimmten auswählbaren Punkten - in der Literatur häufig als 'Tracepunkte' bezeichnet - der Kommunikationsanlage PBX auftretende Ereignisse oder Meldungen zu protokollieren und entsprechende Meldungen M1,...,Mx in einer ersten und zweiten Speichereinrichtung SPE1, SPE2 der Kommunikationsanlage PBX vor ihrer Übermittlung an die Datenverarbeitungseinrichtung DV zwischenzuspeichern. Hierbei können beispielsweise über eine S₀- bzw. S_{2M}-Schnittstelle empfangene oder zu übermittelnde Daten- oder Signalisierungsinformationen - wie z.B. ein Tastendruck an einem internen Kommunikationsendgerät KE-I - oder Zustände der zentralen Vermittlungstechnik der Kommunikationsanlage PBX - wie z.B. "Verbindung eingerichtet" oder "Verbindung abgebaut" - aufgezeichnet und entsprechende Meldungen M1,...,Mx in der ersten bzw. zweiten Speichereinrichtung SPE1, SPE2 der Kommunikationsanlage PBX gespeichert werden.

Alternativ zu einem einzelnen 'Tracepunkt' können auch die an einer Verbindung über die Kommunikationsanlage PBX beteiligten 'Tracepunkte' gemeinsam überwacht werden. Soll beispielsweise eine Verbindung zwischen einem internen Kommunikationsendgerät KE-I und einem externen, über das Kommunikationsnetz KN mit der Kommunikationsanlage PBX verbundenen Kommunikationsendgerät KE-E überwacht werden, so werden alle Meldungen und Zustände der entsprechenden den Anschluß des internen Kommunikationsendgerätes KE-I realisierenden S₀-Schnittstelle, der zentralen Vermittlungstechnik und der den Anschluß des Kommunikationsnetzes KN realisierenden S_{2M}-Schnittstelle protokolliert und entsprechende Meldungen M1,...,Mx in der ersten bzw. zweiten Speichereinrichtung SPE1, SPE2 der Kommunikationsanlage PBX gespeichert.

Zur Zwischenspeicherung der Meldungen M1,...,Mx in der Kommunikationsanlage PBX vor ihrer Übermittlung an die Datenverarbeitungseinrichtung DV weist die Kommunikationsanlage PBX eine erste Speichereinrichtung SPE1 und eine zweite Speichereinrichtung SPE2 auf. Durch die erste Speichereinrichtung SPE1 erfolgt ein Aufsammeln der Meldungen M1,...,Mx und ein Zusammenfassen dieser Meldungen M1,...,Mx zu einem Nachrichtenblock innerhalb einer einstellbaren Zeitspanne. Nach Ablauf der Zeitspanne oder bei Erreichen eines vorgegebenen Speicherfüllwertes der ersten Speichereinrichtung SPE1 - im vorliegenden Ausführungsbeispiel bei Erreichen der maximalen Speicherkapazität der ersten Speichereinrichtung SPE1 - wird der gesamte Nachrichtenblock an die zweite, gemäß dem FIFO-Prinzip (First In First Out) ausgestaltete Speichereinrichtung SPE2 übermittelt und in einer freien Speicherzelle SZ der zweiten Speichereinrichtung SPE2 gespeichert. Nach einem Empfang einer entsprechenden Anforderungsmeldung durch die Datenverarbeitungseinrichtung DV wird der gesamte Nachrichtenblock in einem für die Übermittlung zwischen der Kommunikationsanlage PBX und der Datenverarbeitungseinrichtung DV vorgesehenen Datenpaket an die Datenverarbeitungseinrichtung DV übermittelt. Die Größe der ersten Speichereinrichtung SPE1 entspricht dabei der maximalen Größe - beispielsweise 250 Byte - des für die Datenübermittlung zwischen der Kommunikationsanlage PBX und der Datenverarbeitungseinrichtung DV eingerichteten Datenpaketes.

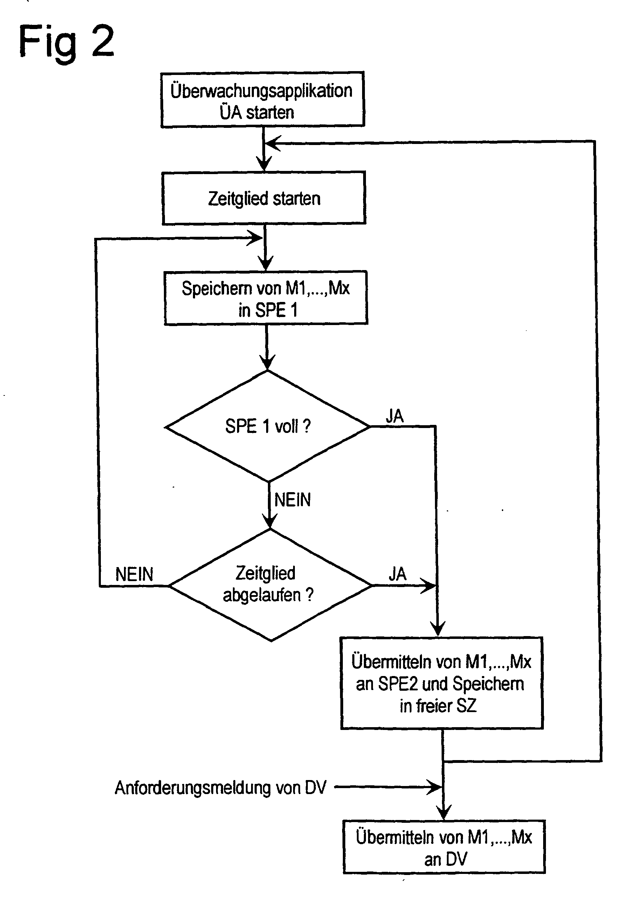

Fig. 2 zeigt ein Ablaufdiagramm zur Veranschaulichung der bei einer Übermittlung von Meldungen von der Kommunikationsanlage PBX an die Datenverarbeitungseinrichtung DV ablaufenden wesentlichen Verfahrensschritte.

Nach einem Aktivieren der Überwachungsapplikation ÜA zur Überwachung eines 'Tracepunktes' ausgehend von der auf der Datenverarbeitungseinrichtung DV laufenden Administrationsroutine AR wird durch die Überwachungsapplikation ÜA ein Zeitglied gestartet. Anschließend werden für am 'Tracepunkt' auftretende Meldungen bzw. Ereignisse entsprechende Meldungen M1,...,Mx solange in der ersten Speichereinrichtung SPE1 gespeichert bis die maximale Speicherkapazität der ersten Speichereinrichtung SPE1 erreicht, oder das Zeitglied abgelaufen ist. Ist die maximale Speicherkapazität der ersten Speichereinrichtung SPE1 erreicht oder ist das Zeitglied abgelaufen, so werden die Meldungen M1,...,Mx zusammengefaßt als Nachrichtenblock gemeinsam an die zweite Speichereinrichtung SPE2 übermittelt und in einer ersten freien Speicherzelle SZ der zweiten Speichereinrichtung SPE2 gespeichert.

Die in der zweiten Speichereinrichtung SPE2 gespeicherten Nachrichtenblöcke werden daraufhin jeweils nach Empfang einer von der Datenverarbeitungseinrichtung DV gesendeten entsprechenden Anforderungsmeldung aus der zweiten Speichereinrichtung SPE2 ausgelesen und an die Datenverarbeitungseinrichtung DV übermittelt. Die im Rahmen von Nachrichtenblöcken an die Datenverarbeitungseinrichtung DV übermittelten Meldungen M1,...,Mx werden durch die Administrationsroutine AR anschließend z.B. an einem Bildschirm der Datenverarbeitungseinrichtung DV ausgegeben. Die empfangene Anforderungsmeldung kann dabei eine Antwortmeldung der Administrationsroutine AR auf einen zuvor übermittelten Nachrichtenblock sein.

Die Zeitspanne bis zum Ablauf des Zeitgliedes wird im vorliegenden Ausführungsbeispiel auf 3 Sekunden gesetzt, so daß in der Kommunikationsanlage PBX generierte, den 'Tracepunkt' betreffende Meldungen M1,...,Mx im Mittel nach 1 bis 2 Sekunden an die Datenverarbeitungseinrichtung DV übermittelt werden. Dadurch wird sichergestellt, daß eventuelle für die Anzeige der Meldungen M1,...,Mx durch die Administrationsroutine AR bestehende Realzeitanforderungen hinreichend erfüllt sind.

Durch das Zwischenspeichern und Zusammenfassen der zu übermittelnden Meldungen M1,...,Mx zu einem Nachrichtenblock in der ersten Speichereinrichtung SPE1 der Kommunikationsanlage PBX und das nachfolgende Übermitteln des gesamten Nachrichtenblocks an die zweite Speichereinrichtung SPE2 der Kommunikationsanlage PBX, von der aus der Nachrichtenblock nach Empfang einer entsprechenden Anforderungsmeldung bzw. Antwortmeldung an die Datenverarbeitungseinrichtung DV übermittelt wird, kann die Anzahl der in bzw. aus der Kommunikationsanlage PBX heraus zu übermittelnden Nachrichten auf einfache Weise reduziert werden. Eine Meldung M1,...,Mx weist in der Regel eine Länge zwischen 20 und 200 Byte auf, wohingegen die für eine Datenübermittlung zwischen der Kommunikationsanlage PBX und der Datenverarbeitungseinrichtung DV zur Verfügung stehenden Datenpakete in der Regel eine Länge von 250 Byte aufweisen. Werden die einzelnen Meldungen M1,...,Mx - wie im Stand der Technik üblich - nacheinander von der Kommunikationsanlage PBX an die Datenverarbeitungseinrichtung DV übermittelt, müssen die Datenpakete mit Fülldaten aufgefüllt werden. Durch das Zusammenfassen mehrerer Meldungen M1,...,Mx zu einem Nachrichtenblock mit einer maximalen Länge von 250 Byte, wird die zwischen der Kommunikationsanlage PBX und der Datenverarbeitungseinrichtung DV zur Verfügung stehende Übertragungsbandbreite somit besser ausgenützt.

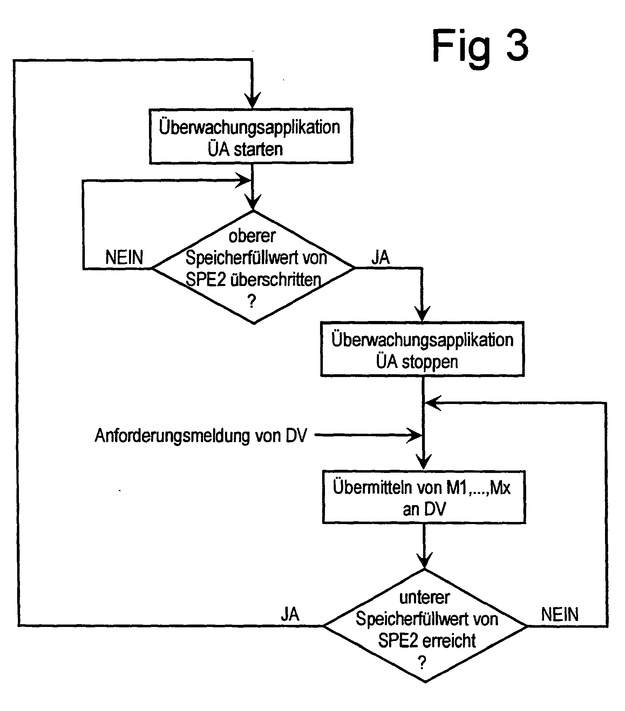

Fig. 3 zeigt ein Ablaufdiagramm zur Veranschaulichung der bei einer Überwachung des Speicherfüllstandes der zweiten Speichereinrichtung SPE2 der Kommunikationsanlage PBX ablaufenden wesentlichen Verfahrensschritte.

Nach einem Aktivieren der Überwachungsapplikation ÜA zur Überwachung eines 'Tracepunktes' ausgehend von der auf der Datenverarbeitungseinrichtung DV laufenden Administrationsroutine AR wird durch die Überwachungsapplikation ÜA überprüft, ob ein oberer Speicherfüllwert - beispielsweise 80% der Speichereinrichtungsgröße - der zweiten Speichereinrichtung SPE2 der Kommunikationsanlage PBX überschritten ist. Ist dies nicht der Fall, läuft die Überwachungsapplikation ÜA - wie unter Bezugnahme auf Fig. 2 beschrieben - weiter und die an die Datenverarbeitungseinrichtung DV zu übermittelnden Meldungen M1,...,Mx werden als Nachrichtenblöcke zusammengefaßt vor Ihrer Übermittlung an die Datenverarbeitungseinrichtung DV in der zweiten Speichereinrichtung SPE2 zwischengespeichert.

Ist dagegen der obere Speicherfüllwert der zweiten Speichereinrichtung SPE2 überschritten, wird die Überwachungsapplikation ÜA von der zentralen Steuerung CC der Kommunikationsanlage PBX gestoppt, d.h. die den eingestellten 'Tracepunkt' betreffenden Meldungen M1,...,Mx werden nicht mehr in der ersten Speichereinrichtung SPE1 gespeichert. Gleichzeitig wird eine Information von der Kommunikationsanlage PBX an die Datenverarbeitungseinrichtung DV übermittelt, die anzeigt, daß die Überwachungsapplikation ÜA unterbrochen wurde.

Im folgenden werden die in den Speicherzellen SZ der zweiten Speichereinrichtung SPE2 gespeicherten Nachrichtenblöcke jeweils nach Empfang einer entsprechenden Anforderungsmeldung bzw. Antwortmeldung auf einen davor übermittelten Nachrichtenblock an die Datenverarbeitungseinrichtung DV übermittelt. Ist durch das Auslesen und Übermitteln der in der zweiten Speichereinrichtung SPE2 gespeicherten Nachrichtenblöcke ein unterer Speicherfüllwert - beispielsweise 20% der Speichereinrichtungsgröße - der zweiten Speichereinrichtung SPE2 erreicht, wird die Überwachungsapplikation ÜA durch die zentrale Steuerung CC der Kommunikationsanlage PBX wieder gestartet. Gleichzeitig wird eine Information von der Kommunikationsanlage PBX an die Datenverarbeitungseinrichtung DV übermittelt, die anzeigt, daß die Überwachungsapplikation ÜA wieder gestartet wurde.

Durch eine Definition eines oberen Speicherfüllwertes für die zweite Speichereinrichtung SPE2, wobei bei Erreichen des oberen Speicherfüllwertes die Überwachungseinrichtung ÜA gestoppt wird, kann eine unnütze Beanspruchung der Kommunikationsanlagen-Ressourcen - wie beispielsweise bei einem Überlaufen der zweiten Speichereinrichtung SPE2 - durch die Überwachungseinrichtung ÜA auf einfache Weise unterbunden werden.

## Patentansprüche

1. Verfahren für eine Nachrichtenübermittlung zwischen zwei Kommunikationseinrichtungen (PBX, DV),
wobei von einer ersten Kommunikationseinrichtung (PBX) an eine zweite Kommunikationseinrichtung (DV) zu übermittelnde Meldungen (M1,...,Mx) in einer ersten Speichereinrichtung (SPE1) der ersten Kommunikationseinrichtung (PBX) gespeichert werden,
wobei nach Ablauf einer vorgebbaren Zeitspanne (t) oder bei Erreichen eines vorgegebenen Speicherfüllwertes der ersten Speichereinrichtung (SPE1), die in der ersten Speichereinrichtung (SPE1) gespeicherten Meldungen (M1,...,Mx) an eine zweite, mehrere Speicherzellen (SZ) aufweisende Speichereinrichtung (SPE2) der ersten Kommunikationseinrichtung (PBX) übermittelt und in eine erste freie Speicherzelle (SZ) der zweiten Speichereinrichtung (SPE2) gespeichert werden, und
wobei die in der Speicherzelle (SZ) der zweiten Speichereinrichtung (SPE2) gespeicherten Meldungen (M1,...,Mx) nach Empfang einer Anforderungsmeldung gemeinsam als Nachrichtenblock von der ersten Kommunikationseinrichtung (PBX) an die zweite Kommunikationseinrichtung (DV) übermittelt werden.

2. Verfahren nach Anspruch 1,
**dadurch gekennzeichnet,**
**daß** die Anforderungsmeldung eine Bestätigungsmeldung auf einen zuvor übermittelten Nachrichtenblock ist.

3. Verfahren nach Anspruch 1 oder 2,
**dadurch gekennzeichnet,**
**daß** die in der ersten Speichereinrichtung (SPE1) gespeicherten Meldungen (M1,...,Mx) bei Erreichen der maximalen Speicherkapazität der ersten Speichereinrichtung (SPE1) an die zweite Speichereinrichtung (SPE2) übermittelt werden.

4. Verfahren nach einem der vorhergehenden Ansprüche,
**dadurch gekennzeichnet,**
**daß** die Meldungen (M1,...,Mx) im Rahmen einer, auf der ersten Kommunikationseinrichtung (PBX) ablaufenden, von der zweiten Kommunikationseinrichtung (DV) gestarteten Überwachungsapplikation (ÜA) an die zweite Kommunikationseinrichtung (DV) übermittelt werden.

5. Verfahren nach Anspruch 4,
**dadurch gekennzeichnet,**
**daß** die Überwachungsapplikation (ÜA) bei Erreichen eines vorgegebenen oberen Speicherfüllwertes der zweiten Speichereinrichtung (SPE2) durch die erste Kommunikationseinrichtung (PBX) gestoppt wird,
**daß** die in den Speicherzellen (SZ) der zweiten Speichereinrichtung (SPE2) gespeicherten Meldungen (M1,...,Mx) nach Empfang von Anforderungsmeldungen weiterhin an die zweite Kommunikationseinrichtung (DV) übermittelt werden, und
**daß** bei Erreichen eines vorgegebenen unteren Speicherfüllwertes der zweiten Speichereinrichtung (SPE2) die Überwachungsapplikation (ÜA) durch die erste Kommunikationseinrichtung (PBX) wieder gestartet wird.

6. Verfahren nach Anspruch 1 und 5,
**dadurch gekennzeichnet,**
**daß** der Speicherfüllwert der ersten Speichereinrichtung (SPE1) und der untere und der obere Speicherfüllwert der zweiten Speichereinrichtung (SPE2) individuell konfigurierbar sind.

## Claims

1. Method for message transmission between two communication facilities (PBX, DV),
wherein messages (M1, ..., Mx) to be transmitted from a first communication facility (PBX) to a second communication facility (DV) are stored in a first storage device (SPE1) of the first communication facility (PBX),
wherein after a predeterminable time interval (t) has elapsed or when a predetermined memory filling level of the first storage device (SPE1) is reached, the messages (M1, ..., Mx) stored in the first storage device (SPE1) are transmitted to a second storage device (SPE2), having a number of memory cells (SZ), of the first communication facility (PBX) and are stored in a first free memory cell (SZ) of the second storage device (SPE2), and
wherein the messages (M1, ..., Mx) stored in the memory cell (SZ) of the second storage device (SPE2) are jointly transmitted as message block from the first communication facility (PBX) to the second communication facility (DV) after a request message has been received.

2. Method according to Claim 1, **characterized in that** the request message is an acknowledgement message following a previously transmitted message block.

3. Method according to Claim 1 or 2, **characterized in that** the messages (M1, ..., Mx) stored in the first storage device (SPE1) are transmitted to the second storage device (SPE2) when the maximum storage capacity of the first storage device (SPE1) has been reached.

4. Method according to one of the preceding claims, **characterized in that** the messages (M1, ..., Mx) are transmitted to the second communication facility (DV) as part of a monitoring application (ÜA) running on the first communication facility (PBX) and started by the second communication facility (DV).

5. Method according to Claim 4, **characterized in that** the monitoring application (ÜA) is stopped by the first communication facility (PBX) when a predetermined upper memory filling level of the second storage device (SPE2) is reached, **in that** the messages (M1, ..., Mx) stored in the memory cells (SZ) of the second storage device (SPE2) are furthermore transmitted to the second communication facility (DV) after request messages have been received, and that when a predetermined lower memory filling level of the second storage device (SPE2) has been reached, the monitoring application (ÜA) is restarted by the first communication facility (PBX).

6. Method according to Claim 1 and 5, **characterized in that** the memory filling level of the first storage device (SPE1) and the lower and upper memory filling level of the second storage device (SPE2) can be individually configured.

## Revendications

1. Procédé de transmission de messages entre deux dispositifs (PBX , DV) de communication,
dans lequel on mémorise des messages (M1,.. , Mx) à transmettre d'un premier dispositif (PBX) de communication à un deuxième dispositif (DV) de communication dans un premier dispositif (SPE1) de mémoire du premier dispositif (PBX) de communication,
dans lequel après expiration d'un laps de temps (t) pouvant être prescrit ou lorsqu'une valeur prescrite de remplissage de la mémoire du premier dispositif (SPE1) de mémoire a été atteinte, on transmet les messages (M1,..., Mx) mémorisés dans le premier dispositif (SPE1) de mémoire à un deuxième dispositif (SPE2) de mémoire, ayant plusieurs cellules (SZ) de mémoire, du premier dispositif (PBX) de communication et on les mémorise dans une première cellule (SZ) libre de mémoire du deuxième dispositif (SPE2) de mémoire et
dans lequel on transmet les messages (M1,...,Mx) mémorisés dans la cellule (SZ) de mémoire du deuxième dispositif (SPE2) de mémoire, après réception d'un message d'appel, conjointement sous la forme d'un bloc d'informations du premier dispositif (PBX) de communication au deuxième dispositif (DV) de communication.

2. Procédé suivant la revendication 1,
**caractérisé**
**en ce que** le message d'appel est un message de confirmation sur un bloc d'informations transmis précédemment.

3. Procédé suivant la revendication 1 ou 2,
**caractérisé**
**en ce que** l'on transmet au deuxième dispositif (SPE2) de mémoire les messages (M1,...,Mx) mémorisés dans le premier dispositif (SPE1) lorsque la capacité maximum de la mémoire du premier dispositif (SPE1) de mémoire est atteinte.

4. Procédé suivant l'une des revendications précédentes,
**caractérisé**
**en ce que** l'on transmet les messages (M1,...,Mx) au deuxième dispositif (DV) de communication, dans le cadre d'une application (ÜA) de contrôle se déroulant sur le premier dispositif (PBX) de communication et lancé par le deuxième dispositif (DV) de communication.

5. Procédé suivant la revendication 4,
**caractérisé**
**en ce que** l'on arrête par le premier dispositif (PBX) de communication l'application (ÜA) de contrôle lorsqu'est atteinte une valeur supérieure prescrite de remplissage de la mémoire du deuxième dispositif (SPE2) de mémoire,
**en ce que** l'on continue à transmettre au deuxième dispositif (DV) de communication, des messages (M1,...,Mx) mémorisés dans les cellules (SZ) de mémoire du deuxième dispositif (SPE2) de mémoire après réception des messages d'appels et
**en ce que** l'on relance par le premier dispositif (PBX) de communication l'application (ÜA) de contrôle, après avoir atteint une valeur inférieure prescrite de remplissage de la mémoire du deuxième dispositif (SPE2) de mémoire.

6. Procédé suivant la revendication 1 et 5 ,
**caractérisé**
**en ce que** la valeur de remplissage de mémoire du premier dispositif (SPE1) de mémoire et la valeur inférieure et la valeur supérieure de remplissage de mémoire du deuxième dispositif (SPE2) de mémoire peuvent être configurées individuellement.
